# EUROPÄISCHE PATENTSCHRIFT

(11) **EP 2 784 454 B1**
(45) Veröffentlichungstag und Bekanntmachung des Hinweises auf die Patenterteilung: **01.02.2017**
(21) Anmeldenummer: 13161572.6
(22) Anmeldetag: 28.03.2013
(51) Int. Cl.: G01G 7/04, G01G 23/01

(54) **Wägezellendiagnostik**
Weighing cell diagnosis
Diagnostic de cellules de balances

(43) Veröffentlichungstag der Anmeldung: 01.10.2014
(73) Patentinhaber: Mettler-Toledo GmbH, 8606 Greifensee (CH)
(72) Erfinder: Schrag, Daniel, 8426 Lufingen (CH); Rupp, Daniel, 8552 Felben-Wellhausen (CH); Trautweiler, Christoph, 8105 Regensdorf (CH); Burkhard, Hans-Rudolf, 8492 Wila (CH)
(74) Vertreter: Mettler-Toledo

(56) Entgegenhaltungen:
- EP-A1- 0 143 169
- EP-A2- 0 457 134
- DE-B3-102009 009 204

## Beschreibung

Die Erfindung betrifft ein Verfahren zur Überprüfung der Funktionsfähigkeit einer Kraftmessvorrichtung.

Eine Wägezelle ist ein mechanischer Messgrössenumformer zur Bestimmung der Masse, bei dem die vom Wägegut ausgeübte Gewichtskraft in ein elektrisches Signal umgeformt wird, Beispiele sind Dehnungsmessstreifen-Wägezelle, Saiten-Wägezelle oder EMFR-Wägezelle (Electro-Magnetic Force Restauration). Häufig findet eine Wägezelle ihren Einsatz in Kraftmessvorrichtungen, insbesondere Waagen, welche die Gewichtskraft einer aufgelegten Last in ein elektrisches Signal wandeln.

Bei Wägezellen, welche nach dem Prinzip der elektromagnetischen Kraftkompensation arbeiten, wird die Gewichtskraft des Wägeguts entweder direkt oder durch einen oder mehrere, auf Lagern gelagerte(n) Kraftübertragungshebel zu einem elektromechanischen Messaufnehmer übertragen. Der Messaufnehmer erzeugt eine der Gewichtskraft des Wägeguts entsprechende Kompensationskraft und stellt dabei ein elektrisches Signal zur Verfügung, welches durch eine Wägeelektronik, der Verarbeitungseinheit, weiterverarbeitet und zur Anzeige gebracht wird.

Eine EMFR-Wägezelle weist meist ein Parallelogramm auf mit einem feststehenden Parallelschenkel und einen mit diesem durch zwei Parallelführungen verbundenen beweglichen Parallelschenkel, welcher als Lastaufnahmebereich dient. In Hebelsystemen wird die Gewichtskraft über ein an den Lastaufnahmebereich gekoppeltes, längssteifes, biegeelastisches Koppelelement an einen Wägebalken übertragen, welcher am feststehenden Parallelschenkel abgestützt ist. Der Zweck einer solchen Wägezelle besteht darin, die der aufgelegten Last entsprechende Gewichtskraft soweit zu untersetzen, dass der die Kompensationskraft erzeugende Messaufnehmer ein der Gewichtskraft entsprechendes Messsignal ausgeben kann. Bekanntermassen sind die Verbindungsstellen der einzelnen Elemente in hochauflösenden Wägezellen durch Biegelager ausgestaltet. Biegelager definieren eine Drehachse zwischen den zwei gekoppelten Elementen und können bei einer einstückigen Wägezelle, auch monolithische Wägezelle oder Monoblock genannt, als dünne Materialstellen ausgestaltet sein.

In EMFR-Wägezellen bei denen die Gewichtskraft direkt, also ohne Untersetzung der Kompensationskraft mittels Hebeln, von der vom Messaufnehmer erzeugten Kompensationskraft kompensiert wird, sind die Parallelführungen meist als Federelemente bzw. Federgelenke oder Membranen ausgestaltet. Bei solchen Wägezellen, auch Direktmesssysteme genannt, wird von einem einzelnen Messaufnehmer eine der Gewichtskraft der Last entsprechende gleich grosse Kompensationskraft entgegengebracht, oder bei mehreren in einem Verbund angeordneten Messaufnehmern eine entsprechende Teilkompensationskraft.

Bei hochauflösenden Kraftmessvorrichtungen sind die Biegelager dünner und daher auch anfälliger auf Beschädigungen, welche das Wägeresultat beeinflussen oder die Kraftmessvorrichtung unbrauchbar machen können. Zum Beispiel kann ein Schlag auf die Waagschale oder ein Aufprall auf den Untergrund zu einer übermässig hohen Beanspruchung der Parallelführungen und anderen Komponenten führen. Die möglichen Folgen reichen von verbogenen Biegelagern, Federgelenken oder Membranen, über angerissene Stellen in den Biegelagern, Federgelenken oder Membranen, bis zu einem Bruch eines Biegelagers, Federgelenks oder einer Membran.

Ein in einer EMFR-Wägezelle verwendeter Messaufnehmer kann zum Beispiel als eine stromdurchflossene Spule in einem Permanentmagneten ausgestaltet sein. Dabei ist meist die Spule am Wägebalken angeordnet und der Permanentmagnet am feststehenden Parallelschenkel befestigt, aber auch die Variante in, welcher der Permanentmagnet am Wägebalken und die Spule am feststehenden Parallelschenkel angeordnet ist, ist möglich. Im Betrieb einer Kraftmessvorrichtung wird die Spule von einem elektrischem Strom durchflossen, wodurch eine die aufgelegte Last kompensierende Kompensationskraft erzeugt wird. Eine Positionsmesseinrichtung erfasst die Auslenkung der Spule aus ihrer Einspiellage, woraufhin eine Regeleinheit die Stromstärke aufgrund des Positionsmesssignals so regelt, dass die Spule wieder in die Einspiellage zurückgeführt wird. Ist die Spule in der Einspiellage, d.h. wenn alle am System angreifenden Kräfte gleich Null sind, so wird die Grösse des elektrischen Stromes zur Bestimmung des Wägeresultats gemessen und zur Anzeige gebracht.

Ebenso kann sich eine übermässig hohe Beanspruchung, wie oben erwähnt, auch auf die Spule im Magnetsystem oder die Positionsmesseinrichtung auswirken. Im Herstellungsprozess einer Kraftmessvorrichtung ist die Justierung der Wägezelle ein wichtiger Schritt um die Empfindlichkeit und Genauigkeit einzustellen. Diese Einstellungen gelten jeweils nur für die Konfiguration, in welcher die Justierung durchgeführt wurde. Bei einer übermässig hohen Beanspruchung kann sich dabei die Ausrichtung der Spule im Magnetsystem verändern oder die Positionseinrichtung relativ zum Wägebalken verschieben, was zur Folge hat, dass das Wägeresultat nicht korrekt ermittelt wird.

Ist trotz Schädigung der Wägezelle, sei es an einem Biegelager oder durch Positionsveränderungen der Spule im Magnetsystem oder an der Positionsmesseinrichtung gegenüber einer Position in welcher die Kraftmessvorrichtung geeicht wurde, eine vermeintliche Messung des Wägeguts noch möglich, ist eine solche Beschädigung mit heutigen Mitteln nicht zu erkennen. Trotzdem wird von der Kraftmessvorrichtung ein Wägeresultat ausgegeben, welches nicht korrekt ist da die Kraftmessvorrichtung unbeschadet bzw. ohne Fehler zu funktionieren scheint.

Die EP 0 143 169 A1 offenbart eine Waage mit elektromagnetischer Lastkompensation, mit einer Konstantstromquelle zur Speisung einer in einem Permanentmagnetsystem beweglich angeordneten Kompensationsspulenanordnung. Der Gattung nach handelt es sich hierbei um eine Impulskompensationswaage.

Die DE 10 2009 009 204 B4 offenbart ein Verfahren und eine Vorrichtung zur Schweberegelung eines Schwebeteils, welche beispielsweise zur Anwendung bei Magnetschwebewaagen kommt.

Die EP 1 785 703 A1 offenbart ein Verfahren zur Überwachung und/oder zur Bestimmung des Zustandes einer Kraftmessvorrichtung. Die Kraftmessvorrichtung weist dabei eine in einem Innenraum eines Gehäuses angeordnete Kraftmesszelle auf, sowie einen Sensor, welcher ein die Lebensdauer der Kraftmessvorrichtung beeinflussender Parameter des Innenraumklimas misst. Durch das Verfahren kann der Zustand einer Kraftmessvorrichtung überwacht werden ohne dass dabei das Gehäuse zwecks Zustandsbestimmung der Kraftmessvorrichtung geöffnet werden muss. Nachteilig dabei ist, dass eine Beschädigung der Wägezelle, sei es an einem Biegelager oder eine Positionsveränderung der Spule oder der Positionsmesseinrichtung, nach einer übermässig hohen Beanspruchung nicht erkennbar ist.

Um zu gewährleisten, dass die Kraftmessvorrichtung korrekt funktioniert und sich der Benutzer auf den angezeigten Messwert verlassen kann, muss die Wägezelle in regelmässigen Abständen überprüft werden. Diese periodische Überprüfung geschieht meist durch den Hersteller, was einen Ausfall der Kraftmessvorrichtung bedeutet und mit Kosten für den Benutzer einhergeht.

Die Aufgabe der vorliegenden Erfindung liegt darin ein Verfahren zur Verfügung zu stellen, durch welches die Funktionsfähigkeit einer Kraftmessvorrichtung überprüft werden kann.

Zudem soll es möglich sein, dass das Verfahren am Betriebsort der Kraftmessvorrichtung und durch diese selbst durchgeführt werden kann.

Die Aufgaben werden erfindungsgemäss mit einem Verfahren zur Überprüfung der Funktionsfähigkeit, einer nach dem elektromagnetischen Kraftkompensationsprinzip arbeitenden Kraftmessvorrichtung gemäss Anspruch 1 gelöst.

Die Kraftmessvorrichtung umfasst einen feststehenden Parallelschenkel und einen die Last eines aufgelegten Wägeguts aufnehmenden beweglichen Parallelschenkel, welcher durch Parallelführungen mit dem feststehenden Parallelschenkel verbunden ist. Weiter umfasst die Kraftmessvorrichtung einen mit dem beweglichen Parallelschenkel in kraftübertragender Weise verbundenen Messaufnehmer umfassend eine in einem Magnetsystem beweglichen Spule, welche von einem elektrischen Strom durchflossen werden kann, sowie einen die durch das Auflegen einer Last auf den beweglichen Parallelschenkel verursachte Auslenkung der Spule aus ihrer Einspiellage in Bezug auf das Magnetsystem ermittelnden Positionssensor. Der elektrische Strom durch die Spule dient dazu die Spule und den mit der Spule oder dem Magnetsystem verbundenen beweglichen Parallelschenkel, durch die elektromagnetische Kraft zwischen der Spule und dem Magnetsystem, in die Einspiellage zurückzuführen und/oder dort zu halten.

Erfindungsgemäss wird mindestens ein Systemkennmittel der Kraftmessvorrichtung mittels einer Verarbeitungseinheit erstellt, und das Systemkennmittel mit mindestens einem in der Verarbeitungseinheit persistent abgespeicherten unveränderlichen Systemreferenzmittel verglichen, wobei aufgrund des Vergleichs die Funktionsfähigkeit der Kraftmessvorrichtung bestimmt wird und wonach eine Aktion der Kraftmessvorrichtung erfolgt, und wobei zur Überprüfung der Funktionsfähigkeit die Grösse des elektrischen Stromes und die Grösse der Auslenkung der Spule aus ihrer Einspiellage verwendet werden.

Durch das erfinderische Verfahren ist die Kraftmessvorrichtung in der Lage die Auslenkung der Spule aus ihrer Einspiellage bzw. deren Position im Magnetsystem mit in die Überprüfung der Funktionsfähigkeit einfliessen zu lassen, da die Grösse der Auslenkung der Spule aus ihrer Einspiellage zusätzlich der Verarbeitungseinheit zugeführt wird.

Der Messaufnehmer kann auf verschiedene Arten in der Kraftmessvorrichtung angeordnet sein. Entweder ist die Spule am beweglichen Parallelschenkel und das Magnetsystem am feststehenden Parallelschenkel, oder die Spule am feststehenden Parallelschenkel und das Magnetsystem am beweglichen Parallelschenkel befestigt. In beiden Fällen können sich die Spule und das Magnetsystem relativ zu einander bewegen. Der elektrische Strom durch die Spule, meist geregelt durch einen PID-Regler, bewirkt in beiden Fällen eine elektromagnetische Kraft zwischen der Spule und dem Magnetsystem, welche die Spule relativ zum Magnetsystem in ihre Einspiellage zurückführt und/oder dort hält wenn eine Last auf den Lastaufnahmebereich aufgelegt wird. Die Spule, welche im Magnetsystem beweglich angeordnet ist, kann durch eine oder mehrere Wicklungen ausgestaltet sein. Das Magnetsystem selbst kann ein Permanentmagnet oder ein stromdurchflossener Elektromagnet sein. Die gebräuchlichste Art ist es das Magnetsystem am feststehenden Bereich anzubringen und die Spule direkt oder gekoppelt über ein- oder mehrere Hebel am Lastaufnahmebereich. Dies ist meist deshalb sinnvoll, weil die geringere Massenträgheit, in diesem Fall die Massenträgheit der Spule, ein schnelleres Zurückführen in die bzw. ein stabileres Halten der Einspiellage ermöglicht. Es gibt aber auch Kraftmessvorrichtungen in denen das Magnetsystem als Permanentmagnet am beweglichen Teil angeordnet ist, um beispielsweise die Stromversorgung der Spule zu vereinfachen.

Die Einspiellage ist die Lage der Spule im Magnetsystem, in welcher ein Gleichgewicht zwischen allen auf das System wirkenden Kräften besteht. Bei Hebelsystemen entspricht dies ebenfalls einer Wägebalkenposition gleich null. Aufgrund der Verbindung der Spule mit dem Wägebalken ist eine Abweichung des Wägebalkens von der Einspiellage gleichbedeutend mit einer Auslenkung der Spule aus ihrer Einspiellage. Gleiches gilt wenn anstelle der Spule das Magnetsystem mit dem Wägebalken verbunden ist. Als Wägebalken wird im Sinne dieser Anmeldung jener ein- oder zweiseitige Hebel der kraftübertragenden Verbindung bezeichnet, an welchem der Positionssensor die Einspiellage überwacht. In bevorzugter Weise liegen die Drehachse des Wägebalkens, der Massenschwerpunkt des Wägebalkens, die Verbindung des ersten Hebelarms mit der Koppel, und der Krafterzeugungsmittelpunkt des Messaufnehmers, zusammen auf einer Ebene. Ist dies erfüllt, so ist der Wägebalken ohne aufgelegte Last momentfrei und unabhängig von einem schiefen Untergrund stets im Gleichgewicht. Die Ebene gebildet durch die oben genannten Punkte wird auch niveauneutrale Ebene genannt.

In einem Direktmesssystem ist die Spule oder das Magnetsystem des Messaufnehmers an einem Kraftübertragungsgestänge angebracht, welches direkt mit dem Lastaufnahmebereich verbunden ist, was bedeutet, dass keine Hebel zur Untersetzung der aufgebrachten Kraft vorhanden sind. Eine Auslenkung der Spule oder des Magnetsystems aus ihrer/dessen Einspiellage ist bei Direktmesssystemen gleichbedeutend mit einer Abweichung des Kraftübertragungsgestänges aus dessen Einspiellage.

Bevorzugt kommt ein solches erfinderisches Verfahren bei Mikrowaagen zur Anwendung, da diese meist sehr dünne Biegelager aufweisen. Diese Waagen können eine Wägelast von 10g mit einer Messauflösung von 0.001 mg bestimmen, d.h. bis auf einen Zehnmillionstel genau. Es reichen deshalb schon verhältnismässig geringe Überbelastungen aus, um bei einer Mikrowaage eine Schädigung eines Biegelagers hervorzurufen.

Die Erfindung eignet sich sowohl für Kraftmessvorrichtungen mit Messaufnehmer, welche nach dem Push-Prinzip, als auch solche, die nach dem Push-Pull-Prinzip die Kompensationskraft erzeugen. Ihr Unterschied liegt in der Erzeugung der Kompensationskraft: ein Push-System kann die Kompensationskraft in nur eine Richtung erzeugen, während ein Push-Pull-System in der Lage ist, eine Kompensationskraft in zwei entgegengesetzte Richtungen zu erzeugen.

Die Auslenkung der Spule aus ihrer Einspiellage wird mittels des Positionssensors ermittelt und quantifiziert, welcher einer Positionskontrolleinheit dazu dient den elektrischen Strom durch die Spule so zu regeln, dass die Spule und der mit der Spule oder dem Magnetsystem verbundene bewegliche Parallelschenkel durch die elektromagnetische Kraft zwischen der Spule und dem Magnetsystem in die Einspiellage zurückgeführt werden. Alternativ kann die Grösse der Auslenkung der Spule aus ihrer Einspiellage auch mittels eines zusätzlichen Positionssensors ermittelt werden. Als zusätzliche Sensoren sind Sensoren möglich, welche dieselbe Information über die Grösse der Auslenkung der Spule innerhalb des Magnetsystems als Sensorsignal erfassen, wie sie der Positionssensor der Positionsmessung erfasst. Zum Beispiel könnte dieses Sensorsignal von einem Beschleunigungs-, Geschwindigkeits-, Winkelmess- oder Positionssensor bereitgestellt werden, um diese Information einer Verarbeitungseinheit zur Verfügung zu stellen.

Eine Weiterbildung der Erfindung sieht vor, dass das mindestens eine Systemkennmittel und das mindestens eine Systemreferenzmittel jeweils einen Bezug zwischen der Grösse des elektrischen Stromes und der Grösse der Auslenkung der Spule aus ihrer Einspiellage herstellen.

Eine vorteilhafte Weiterbildung der Erfindung sieht vor, dass das mindestens eine Systemreferenzmittel die Funktionsfähigkeit der Kraftmessvorrichtung zum Zeitpunkt der erstmaligen Justierung, insbesondere einer Justierung während der Herstellung oder zeitnah der Fertigstellung der Kraftmessvorrichtung, und/oder den Zustand einer einwandfreien Funktionsfähigkeit der Kraftmessvorrichtung darstellt.

Eine Weiterbildung der Erfindung sieht vor, dass das mindestens eine Systemkennmittel und/oder das mindestens eine Systemreferenzmittel jeweils eine Systemtabelle mit zur Grösse der Auslenkung der Spule aus ihrer Einspiellage und zur Grösse des elektrischen Stromes zugehörigen Werten der Gewichtskraft der aufgelegten Last umfassen/umfasst und/oder eine Systemfunktion mit mindestens einem Parameter und mit mindestens der Grösse der Auslenkung der Spule aus ihrer Einspiellage und der Grösse des elektrischen Stromes als Eingangsgrössen umfassen/umfasst. Der mindestens eine Parameter der Systemfunktion ist im Kontext dieser Erfindung als Variable einer mathematischen Funktion zu verstehen, welche die Abhängigkeit zwischen der Grösse der Auslenkung der Spule aus ihrer Einspiellage und der Grösse des elektrischen Stromes beschreibt.

Mit einer Systemtabelle wird zum Vergleich des Systemkennmittels mit dem Systemreferenzmittel der entsprechende Wert aus einer Tabelle, welche Werte in Abhängigkeit der Grösse der Auslenkung der Spule aus ihrer Einspiellage und der Grösse der Stromstärke aufweist, gewählt. Als Systemfunktion ist eine mathematische Funktion mit mindestens zwei Eingangsgrössen und mindestens einem Parameter zu verstehen.

Eine weitere Ausgestaltung der Erfindung sieht vor, dass der mindestens eine Parameter der Systemfunktion als eine Parametertabelle abgespeichert ist. Aus einer Parametertabelle wird der entsprechende Parameter der Systemfunktion in Abhängigkeit der Grösse der Auslenkung der Spule aus ihrer Einspiellage und der Grösse der Stromstärke gewählt. Zudem kann der mindestens eine Parameter der Systemfunktion lastabhängig sein.

Eine andere vorteilhafte Weiterbildung der Erfindung sieht vor, dass die Ermittlung der Werte der Systemtabelle und/oder die Ermittlung des mindestens einen Parameters der Systemfunktion durch Variieren der Auslenkung der Spule und im Wesentlichen zeitgleichem Messen der zur Auslenkung der Spule aus ihrer Einspiellage zugehörigen Grösse des elektrischen Stromes erfolgt, und/oder durch Variieren der Grösse des elektrischen Stromes und im Wesentlichen zeitgleichem Messen der zur Grösse des elektrischen Stromes zugehörigen Auslenkung der Spule aus ihrer Einspiellage erfolgt.

Eine vorteilhafte Weiterbildung der Erfindung sieht vor, dass die Ermittlung der Werte der Systemtabelle und/oder die Ermittlung des mindestens einen Parameters der Systemfunktion jeweils ohne und mit einem den beweglichen Parallelschenkel beaufschlagenden Gewicht durchgeführt wird, wobei es sich bei dem Gewicht um ein extern auflegbares oder ein intern mittels einer Vorrichtung auflegbares Gewicht handeln kann. Die Ermittlung der Werte und/oder des mindestens einen Parameters unter verschiedenen Lastbedingungen verbessert die Genauigkeit der Überprüfung der Funktionsfähigkeit über den gesamten Wägebereich der gravimetrischen Kraftmessvorrichtung.

Ein anderer Aspekt der Erfindung sieht vor, dass das mindestens eine Systemreferenzmittel für jede Kraftmessvorrichtung individuell oder für denselben Typ einer Kraftmessvorrichtung generisch erstellt wird. Es ist offensichtlich, dass jede Kraftmessvorrichtung, geprägt durch die individuellen Fertigungstoleranzen am Magnetsystem, an den Biegelagern, an der Positionsmessung und der Hebelübersetzung, eigene Werte und/oder Parameter aufweist, welche dann nur für die eine Kraftmessvorrichtung gelten. Um in der Produktion der Kraftmessvorrichtungen die Ermittlung dieser Werte und/oder Parameter zu beschleunigen, kann ein Systemreferenzmittel in der Verarbeitungseinheit abgespeichert werden, welches generisch aus dem arithmetischen Mittel von vorherig bestimmten Systemreferenzmitteln erstellt wurde.

Eine besonders vorteilhafte Weiterbildung der Erfindung sieht vor, dass mittels des Vergleichs ein Bruch oder Anriss und/oder Verbiegen eines Gelenkes der Parallelführung und/oder eine Positionsveränderung der Spule im Magnetsystem gegenüber einer ursprünglichen Position und/oder eine Positionsveränderung des Positionssensors gegenüber einer ursprünglichen Position überprüft wird, wobei die ursprünglichen Positionen jeweils für den Zustand der Kraftmessvorrichtung gelten, in welcher das Systemreferenzmittel erstellt wurde.

Eine bevorzugte Ausführungsform der Erfindung zeichnet sich dadurch aus, dass aus dem erstellten Systemkennmittel und den vorangehend erstellten Systemkennmitteln ein Verlauf der Funktionsfähigkeit erstellt wird, mittels welchem eine Vorhersage über die Funktionsfähigkeit, insbesondere über die verbleibende Zeit bis zur nächsten Wartung der Kraftmessvorrichtung, getroffen werden kann.

Eine Kraftmesszelle für nach dem elektromagnetischen Kraftkompensationsprinzip arbeitende gravimetrische Kraftmessvorrichtung mit einer kraftübertragenden mechanischen Verbindung zwischen einem Messaufnehmer, umfassend eine in einem Magnetsystem beweglichen Spule und einem beweglichen Parallelschenkel, wobei entweder die Spule oder das Magnetsystem mit dem beweglichen Parallelschenkel in Verbindung steht, zeichnet sich dadurch aus, dass die Kraftmesszelle einen durch das Auflegen einer Last auf den beweglichen Parallelschenkel verursachte Auslenkung der Spule aus ihrer Einspiellage ermittelnden Positionssensor aufweist, mittels welchem die Grösse der Auslenkung der Spule aus ihrer Einspiellage bestimmt werden kann, wobei die Grösse der Auslenkung der Spule aus ihrer Einspiellage in einem Verfahren zur Überprüfung der Funktionsfähigkeit verwendet werden kann.

In einem computergestütztem Programm zur Ausführung des Verfahrens zur Überprüfung der Funktionsfähigkeit mittels einer nach dem elektromagnetischen Kraftkompensationsprinzip arbeitenden gravimetrischen Kraftmessvorrichtung wird ein Signals zur Auslösung einer Aktion durch die Kraftmessvorrichtung, beispielsweise eine Freigabe oder eine Sperrung der Kraftmessvorrichtung, zur Ausgabe gebracht. Die Kraftmessvorrichtung weist dabei eine in einem Magnetsystem bewegliche Spule auf, welche von einem elektrischen Strom durchflossen werden kann, der dazu dient die Spule und den mit der Spule oder dem Magnetsystem verbundenen beweglichen Parallelschenkel, durch die elektromagnetische Kraft zwischen der Spule und dem Magnetsystem, in die Einspiellage zurückzuführen und/oder dort zu halten, sowie eine kraftübertragende mechanische Verbindung zwischen der Spule und einem beweglichen Parallelschenkel, und einen die durch das Auflegen der Last auf den beweglichen Parallelschenkel verursachte Auslenkung der Spule aus einer ihrer Einspiellage ermittelnden Sensor. Als Eingangsgrössen des computergestützten Programms werden mindestens die Grösse des elektrischen Stromes und die Grösse der Auslenkung der Spule aus ihrer Einspiellage verwendet.

Eine Weiterbildung des computergestützten Programms sieht vor, dass das computergestützte Programm auf ein Systemreferenzmittel und mindestens ein Systemkennmittel zugreift. Das Systemkennmittel kann dabei im Arbeitsspeicher der programmausführenden Einheit abgespeichert und das Systemreferenzmittel persistent abgespeichert sein.

Im Folgenden wird der Erfindungsgegenstand anhand von bevorzugten Ausführungsbeispielen, welche in den beiliegenden Zeichnungen dargestellt sind erläutert. Es zeigen:
- Fig. 1: Eine schematische Schnittdarstellung einer Kraftmesszelle einer oberschaligen Kraftmessvorrichtung als Hebelsystem in der Seitenansicht;
- Fig. 2: Eine monolithisch aufgebaute Kraftmesszelle als Hebelsystem in der Seitenansicht;
- Fig. 3: Eine Kraftmesszelle als Direktmesssystem;
- Fig. 4: Ein Blockdiagramm mit dessen Hilfe der Funktionsablauf einer erfindungsgemässen Kraftmessvorrichtung beschrieben wird;
- Fig. 5: Ein Blockdiagramm mit dessen Hilfe der Lebenszyklus einer erfindungsgemässen Kraftmessvorrichtung beschrieben wird;
- Fig. 6: Ein Position-Strom-Diagramm, über den gesamten Auslenkungsbereich der Spule, mit den Systemfunktionen S_{E1}, S_{E2} und S_{E3} eines Systemreferenzmittels und einer idealen Systemfunktion A;
- Fig. 7: Ein Position-Strom-Diagramm, über den gesamten Auslenkungsbereich der Spule, mit den Systemfunktionen S_{K1}, S_{K2} und S_{K3} eines Systemkennmittels einer Kraftmessvorrichtung mit beschädigten Biegelagern bzw. Federgelenken oder Membranen;
- Fig. 8: Einen Ausschnitt des Position-Strom-Diagramms aus Fig. 6, mit den Systemfunktionen S_{K1}, S_{K2} und S_{K3} eines Systemkennmittels einer Kraftmessvorrichtung mit beschädigten Biegelagern bzw. Federgelenken oder Membranen, und mit Möglichkeiten der Schwellwertbildung für die Systemfunktionen;
- Fig. 9: Ein Position-Strom-Diagramm, über den gesamten Auslenkungsbereich der Spule, mit einer Systemfunktion S_{K} eines Systemkennmittels und einer Kraftmessvorrichtung mit verschobener Positionsmessung im Vergleich mit einer Systemfunktion S_{E} eines Systemreferenzmittels;
- Fig. 10: Ein Position-Strom-Diagramm, über den gesamten Auslenkungsbereich der Spule, mit einer Systemfunktion S_{K} eines Systemkennmittels einer Kraftmessvorrichtung mit aussermittig verschobener Spule im Magnetsystem im Vergleich mit einer Systemfunktion S_{E} eines Systemreferenzmittels;

Merkmale mit gleicher Funktion und ähnlicher Ausgestaltung sind in der folgenden Beschreibung mit denselben Bezugszeichen versehen.

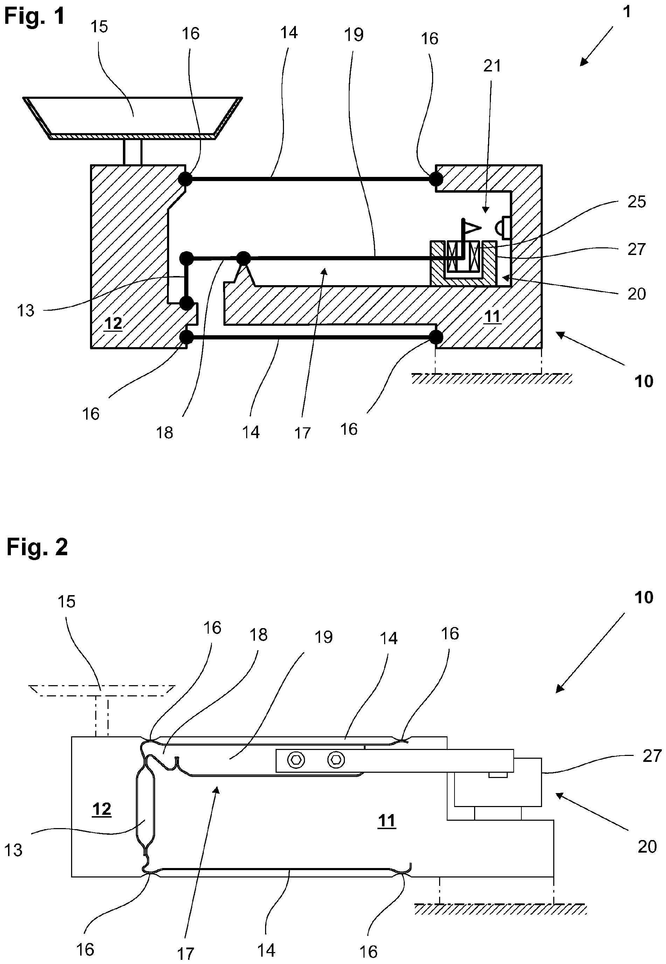

Figur 1 zeigt eine schematische Darstellung einer Kraftmesszelle 10 einer Kraftmessvorrichtung 1 als Hebelsystem von der Seite in einer Schnittdarstellung. Über den feststehenden Parallelschenkel 11 ist die Kraftmessvorrichtung 1 auf einer Unterlage abgestützt. Auf den beweglichen Parallelschenkel 12, welcher durch zwei Parallelführungen 14 mit dem feststehenden Parallelschenkel 11 verbunden ist, wird die zu messende Last über eine Schale 15 aufgelegt. Die Parallelführungen 14 sind jeweils durch Biegelager 16 mit dem beweglichen Parallelschenkel 12, beziehungsweise mit dem feststehenden Parallelschenkel 11 verbunden. Biegelager 16 definieren eine Drehachse und verhalten sich quer zur Drehachse als ein praktisch starres Kraftübertragungselement. Die hier gezeigte Variante als oberschalige Ausführung ist nicht zwingend. Die Kraftmessvorrichtung 1 kann ebenso als unterschalig, meist ein Gehänge aufweisend, ausgeführt werden. Die Koppel 13 überträgt die Gewichtskraft auf den ersten Hebelarm 18 des Wägebalkens 17, welcher an einer Lagerstelle gelagert ist. Am anderen Ende des Wägebalkens 17, dem zweiten Hebelarm 19, ist an seinem äusseren Ende der Messaufnehmer 20 positioniert, welcher die untersetzte Gewichtskraft der Last mit einer Kompensationskraft kompensiert. Der hier dargestellte Messaufnehmer 20 ist als eine in einem Magnetsystem 27 beweglich gelagerte stromdurchflossene Spule 25 gezeigt. Entspricht die erzeugte Kompensationskraft des Messaufnehmers 20 am zweiten Hebelarm 19 der Gewichtskraft der Last am ersten Hebelarm 18 so ist der Wägebalken 17 im Gleichgewicht und somit in der Einspiellage. Diese Einspiellage wird überwacht durch einen Positionssensor 21.

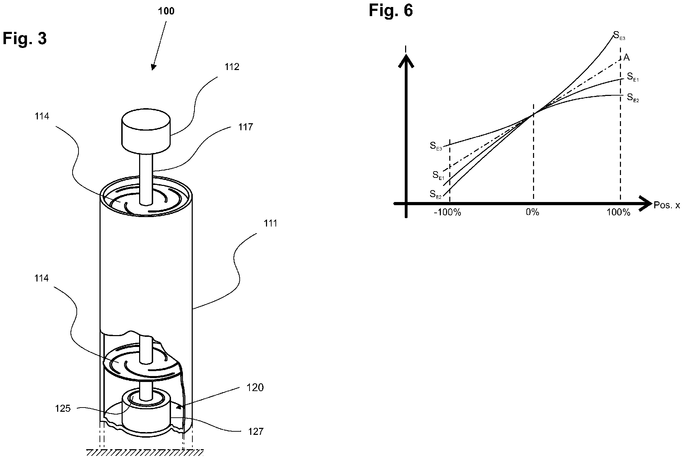

Durch Auflegen einer Masse bzw. Aufbringen einer Kraft auf die Schale 15 senkt sich der bewegliche Parallelschenkel 12, parallel durch die Parallelführungen 14 geführt, ab. Über die Koppel 13 mit dem beweglichen Parallelschenkel 12 verbunden, überträgt der Wägebalken 17 diese Bewegung mit einer definierten Übersetzung an das andere, dem Messumformer 20 zugewandten Ende des Wägebalkens 17. Mittels des Positionssensors 21 wird ein Positionssignal 22 entsprechend der Auslenkung der Spule 25 aus der Einspiellage ermittelt. Dieses Positionssignal 22 ist das Eingangssignal für eine Positionskontrolleinheit 23, welche einen elektrischen Strom 24 durch die Spule 25 so regelt, dass die resultierende Kompensationskraft die Spule 25 und den mit der Spule 25 verbundene Wägebalken 17 wieder in die Einspiellage zurückführt. Im eingeregelten Zustand (Spule 25 befindet sich wieder in der Einspiellage) ist die Stärke des elektrischen Spulenstroms 24 ein Mass für die zu bestimmende, aufgelegte Masse bzw. aufgebrachte Kraft am beweglichen Parallelschenkel 12. Die Stärke des elektrischen Spulenstroms 24 wird gemessen, mittels einer Verarbeitungseinheit 26 (siehe Figur 3) verarbeitet, und danach als Anzeigewert auf einem Display zur Anzeige gebracht.

In Figur 2 ist eine mögliche Ausgestaltung einer Kraftmesszelle 10 einer Kraftmessvorrichtung 1 als monolithische Zelle von der Seite in einer Schnittdarstellung gezeigt. Der feststehende Parallelschenkel 11, der bewegliche Parallelschenkel 12, die Koppel 13, die Parallelführungen 14 und der Wägebalken 17 sind dabei in direkter Materialverbindung aus einem einzigen homogenen Materialblock gearbeitet. Alle diese Elemente werden durch geeignete Fabrikationstechniken aus einem Metallquader durch Trennung, z.B. zerspanende Bearbeitung, Schneiden, oder Erodieren gebildet. Die Biegelager 16, der Drehpunkt des Wägebalkens und die Verbindungsstellen der Koppel 13 sind als dünne Materialbrücken ausgebildet, wobei die Biegelager 16 je nach Wägebereich der Kraftmessvorrichtung 1 in ihrer Materialstärke angepasst werden, d.h. dass die Materialbrücke der Biegelager 16 bei höheren Wägebereichen dicker ausfällt.

Figur 3 zeigt eine mögliche Ausgestaltung einer Kraftmesszelle 100 als Direktmesssystem. Der feststehende Parallelschenkel 111 ist auf dem Untergrund abgestützt. Der bewegliche Parallelschenkel 112, welcher der Lastaufnahme dient ist mit einem Kraftübertragungsgestänge 117 verbunden und wird durch Parallelführungen 114, hier in Figur 3 als Membran ausgestaltet, geführt. In dieser Ausführung ist der Messaufnehmer 120 am unteren Ende des Kraftübertragungsgestänges 117 angeordnet, wobei hier die Spule mit dem beweglichen Parallelschenkel 112 in Verbindung steht und das Magnetsystem 127 am feststehenden Parallelschenkel 111 angeordnet ist. Weitere Ausgestaltungen wären möglich durch Anbringen des Messaufnehmers 120 im Bereich zwischen den Parallelführungen 114 und/oder durch ein vertauschtes Anordnen von Magnetsystem 127 und Spule 125.

Je dünner eine Materialbrücke einer Materialverbindung bzw. ein Federgelenk oder eine Membrane ist, desto beschädigungsanfälliger ist eine Kraftmesszelle 10, 100 bei Schlägen auf den beweglichen Parallelschenkel 12, 112, einem Aufprall auf den Untergrund oder einer übermässig hohen Beanspruchung. Als Folge davon kann die Materialverbindung bzw. das Federgelenk oder die Membran verbogen sein, angerissene Stellen aufweisen oder gar brechen bzw. ganz durchtrennt sein.

Ebenso anfällig auf Schläge, Überbelastungen und/oder einen Aufprall mit dem Untergrund ist der Positionssensor 21 und der Messaufnehmer 20, 120. Diese Komponenten einer Kraftmessvorrichtung 1 werden während der Herstellung oder zeitnah der Fertigstellung einer Kraftmessvorrichtung 1 positioniert und ausgerichtet. Eine anschliessende Justierung der Kraftmessvorrichtung 1 bezieht sich also immer auf die Position, in welcher die Kraftmessvorrichtung 1 positioniert und ausgerichtet wurde. Eine von dieser Position abweichende Position einer Komponente verfälscht das Wägeresultat ohne vom Benutzer bemerkt zu werden.

Trotz Schädigung der Kraftmesszelle 10, 100, sei es an einer Materialverbindung bzw. an einem Federgelenk oder an einer Membrane oder durch Positionsveränderungen der Spule und/oder des Positionssensors gegenüber einer Position in welcher die Kraftmessvorrichtung 1 justiert wurde, kann eine vermeintliche Wägung noch möglich sein, jedoch ist eine solche Schädigung mit heutigen Mitteln nicht zu erkennen. Von der Kraftmessvorrichtung 1 wird dennoch ein Wägeresultat ausgegeben, welches aber nicht korrekt ist, da die Kraftmessvorrichtung 1 unbeschadet bzw. ohne Fehler zu funktionieren scheint.

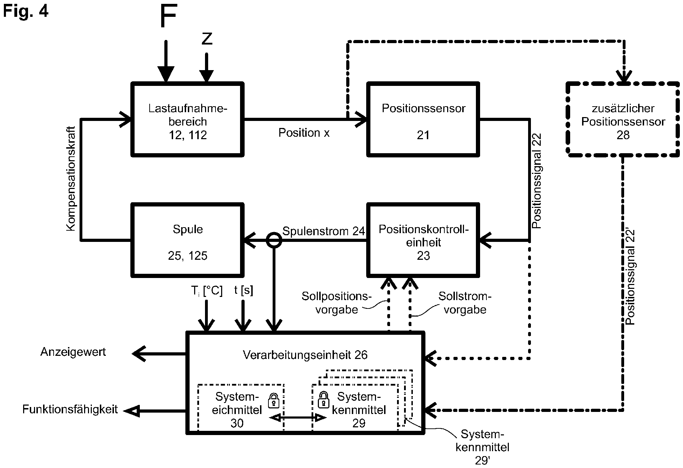

Im Folgenden wird der Funktionsablauf für eine in Betrieb befindliche Kraftmessvorrichtung 1 anhand des Blockdiagrammes der Figur 4 genauer beschrieben. Eine auf die Schale 15 aufgelegte Last übt eine Kraft F auf den beweglichen Parallelschenkel 12, 112 aus. Der Wägebalken 17 und die mit dem Wägebalken 17 verbundene Spule 25 oder das mit dem Wägebalken 17 verbundene Magnetsystem 27, bzw. das Kraftübertragungsgestänge 117 und die mit dem Kraftübertragungsgestänge 117 verbundene Spule 125 oder das mit dem Kraftübertragungsgestänge 117 verbundene Magnetsystem 127 werden aus deren Einspiellage ausgelenkt, das heisst sie nehmen eine andere Position ein. Die neue Position x wird vom Positionssensor 21 ermittelt und als Positionssignal 22 an eine Positionskontrolleinheit 23 weitergeleitet. Anhand des Positionssignals 22 bestimmt die Positionskontrolleinheit 23, meist einen PID-Regler aufweisend, ständig den für die Rückführung des Systems in die Einspiellage nötigen elektrischen Spulenstrom 24. Durch den elektrischen Spulenstrom 24 bildet die Spule 25, 125 ein magnetisches Feld und erzeugt im Magnetsystem 27, 127 eine Kompensationskraft, welche den Wägebalken 17 bzw. das Kraftübertragungsgestänge 117 und damit die Spule 25, 125 zurück in die Einspiellage bringt. Der ganze Ablauf wiederholt sich ständig im Sinne einer Regelung bzw. eines Haltens des Systems in der Einspiellage. Dieser Regelkreis erfasst die Auslenkung des Wägebalkens 17 bzw. des Kraftübertragungsgestänge 117 also dynamisch, das heisst mehrmals pro Sekunde, z.B. im Bereich von 500Hz - 10kHz.

Da der elektrische Spulenstrom 24 ein direktes Mass für die Kompensationskraft ist, wird der elektrische Spulenstrom 24 gemessen und daraus die Gewichtskraft der aufgelegten Last als Anzeigewert von der Verarbeitungseinheit berechnet. Zur Berechnung des Anzeigewertes bezieht die Verarbeitungseinheit 26 auch Zusatzfaktoren mit ein, wie zum Beispiel die Umgebungs- und Magnettemperatur sowie zeitabhängige dynamische Effekte.

Das erfindungsgemässe Verfahren zur Überprüfung der Funktionsfähigkeit zeichnet sich dadurch aus, dass die Verarbeitungseinheit 26 zusätzlich zur Grösse des elektrischen Stromes 24 das Positionssignal 22 des Positionssensors 21, also die Grösse der Auslenkung der Spule 25, 125 aus deren Einspiellage zur Beurteilung der Funktionsfähigkeit verwendet. Dies ist in Figur 3 durch die gestrichelte Linie dargestellt. Ebenfalls möglich anstelle des Positionssignals 22 sind Eingangssignale an die Verarbeitungseinheit 26, welche dieselbe Information über die Position x bzw. über die Position der Spule 25, 125 innerhalb des Magnetsystems 20, 120 beinhalten. In Figur 4 ist dies durch den strichpunktierten Pfad dargestellt. Zum Beispiel könnte ein zweiter zusätzlicher Sensor 28, z.B. ein Beschleunigungs-, Geschwindigkeits-, Winkelmess- oder Positionssensor, diese Information in Form eines Positionssignal 22' an die Verarbeitungseinheit 26 liefern.

Die Kraftmessvorrichtung 1 ist so in der Lage die Grösse der Auslenkung der Spule 25, 125 aus ihrer Einspiellage mit in die Beurteilung der Funktionsfähigkeit einfliessen zu lassen, und so auch Beschädigungen wie zum Beispiel am Magnetsystem 20, 120, an der Positionsmessung, an den Parallelführungen 14, 114 speziell der Biegelager 16 bzw. der Federgelenke oder den Membranen sowie an der Hebelübersetzung zu berücksichtigen.

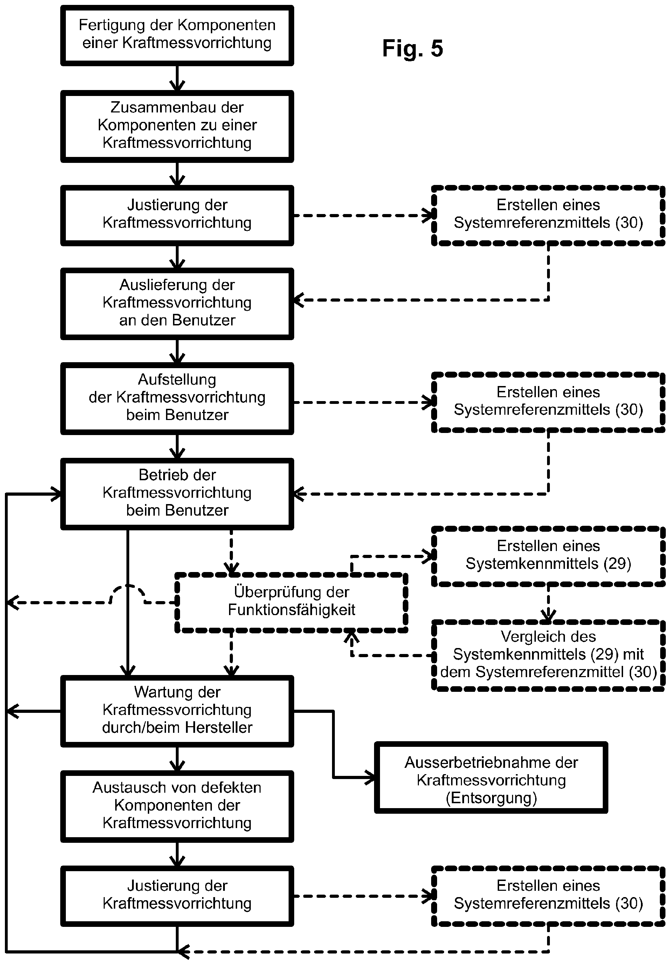

In der Verarbeitungseinheit 26 abgespeichert ist das Systemreferenzmittel 30, welches bei einer Justierung der Kraftmessvorrichtung 1 erstellt wurde (siehe dazu die Beschreibung zur Figur 5). Das Systemreferenzmittel 30 ist persistent abgespeichert, also dauerhaft und nur bei einer erneuten Justierung der Kraftmessvorrichtung 1 überschreibbar. Dies ist in Figur 4 durch das Symbol des geschlossenen Schlosses gekennzeichnet. Das Systemkennmittel 29 hingegen kann während des Betriebs der Kraftmessvorrichtung 1 aktualisiert werden, zum Beispiel nach einer erfolgten Überprüfung der Funktionsfähigkeit. Das nicht mehr aktuelle Systemkennmittel 29' muss aber nicht gelöscht werden, sondern kann weiterhin in der Verarbeitungseinheit 26 abgespeichert bleiben, um beispielsweise in einer Historie Auskunft über den Verlauf der Funktionsfähigkeit einer Kraftmessvorrichtung 1 geben zu können. Unter einer Kalibrierung wird das Feststellen einer Abweichung zwischen dem Messwert und dem wahren Wert der Messgrösse bei vorgegebenen Messbedingungen, ohne eine Veränderung vorzunehmen verstanden. Wird hingegen eine Veränderung vorgenommen spricht man von einer Justierung. Zum Beispiel bei einer Waage wird bei einer Justierung durch Feineinstellen ihrer Funktionen mit den dafür vorgesehenen Teilen durch geschultes Fachpersonal (manuell), oder durch den Anwender halbautomatisch, wobei dazu ein externes oder in der Waage eingebautes Referenzgewicht aufgelegt wird, oder automatisch, falls die Waage einen Justiermechanismus mit Referenzgewicht besitzt, die Veränderung ausgeglichen.

Als Blockdiagramm zeigt Figur 5 den Lebenszyklus einer Kraftmessvorrichtung 1. Zu Beginn werden alle Bauteile bzw. Komponenten einer Kraftmessvorrichtung 1 gefertigt und zu einer Kraftmessvorrichtung 1 zusammengebaut. Anschliessend oder zeitnah zur Fertigstellung der Kraftmessvorrichtung 1 erfolgt üblicherweise eine Kalibrierung der Kraftmessvorrichtung 1 und eine Justierung der Komponenten und Teile der Kraftmessvorrichtung 1. Dabei wird ein Systemreferenzmittel 30 erstellt, welches den Zustand der einwandfreien Funktionsfähigkeit abbildet. Dieses Systemreferenzmittel 30 wird in der Verarbeitungseinheit 26 persistent abgespeichert. Das Systemreferenzmittel 30 kann dabei in Form einer Systemtabelle oder einer Systemfunktion mit mindestens einem Parameter abgespeichert sein. Zusätzlich können noch weitere Setupeinstellungen der Kraftmessvorrichtung 1 in der Verarbeitungseinheit 26 abgespeichert werden.

Ein Systemreferenzmittel 30 kann für jede einzelne Kraftmessvorrichtung 1 individuell, oder für ein und denselben Typ einer Kraftmessvorrichtung 1 generisch ermittelt werden. Bei diesem generisch ermittelten Systemreferenzmittel 30 wird aus mehreren, vorgängig ermittelten Systemreferenzmitteln 30 ein Mittelwert bestimmt, welcher dann für alle Kraftmessvorrichtungen 1 desselben Typs verwendet werden kann.

Die Kraftmessvorrichtung 1 kann nun an den Benutzer ausgeliefert und in Betrieb genommen werden. Bei speziellen, an die Betriebsbedingungen, wie z.B. eine ständig vorhandene Vorlast, angepassten Kraftmessvorrichtungen 1, kann mit der Erstellung des Systemreferenzmittels 30 gewartet werden und erst am Aufstellungsort erfolgen. Heutige Kraftmessvorrichtungen müssen in einem bestimmten Zeitintervall durch die Herstellerfirma auf ihre Funktionsfähigkeit kontrolliert und geprüft werden um gewisse Genauigkeitsanforderungen aus nationalen Verordnungen, Eichvorschriften und/oder Industrienormen zu erfüllen. Dies kann jeweils vor Ort durch einen Servicetechniker oder beim Hersteller der Kraftmessvorrichtung 1 geschehen.

Wird in der Funktionsprüfung durch den Hersteller einen Schaden entdeckt und zeigt es sich, dass sich die Kosten einer Reparatur nicht lohnen wird die Kraftmessvorrichtung 1 ausser Betrieb genommen. Ist das Resultat der Funktionsprüfung positiv, kann der Benutzer die Kraftmessvorrichtung 1 für das nächste Zeitintervall weiter betreiben. Ist die Kraftmessvorrichtung an ein Kommunikationsnetz angeschlossen, kann eine Meldung an den Hersteller ausgelöst werden. Aufgrund der Meldung weiss auch der Hersteller wie es um die Funktionsfähigkeit der Kraftmessvorrichtung bestellt ist und kann bei Bedarf geeignete Schritte einleiten.

Als dritte Möglichkeit können bei Identifikation eines Schadens jene Komponenten ausgetauscht werden, welche einen Defekt erlitten haben oder deren Funktionsfähigkeit fehlerhaft ist. Anschliessend ist eine erneute Justierung der Komponenten und Teile der Kraftmessvorrichtung 1 durch den Hersteller notwendig. Hierbei wird erneut ein Systemreferenzmittel 30 erstellt und in der Verarbeitungseinheit 26 persistent abgespeichert, wobei das vorherige Systemreferenzmittel 30 überschrieben wird. Zusätzliche weitere Setupeinstelllungen können ebenfalls noch in der Verarbeitungseinheit 26 abgespeichert werden. Die Kraftmessvorrichtung 1 ist danach wieder für den Betrieb beim Benutzer freigegeben.

Das erfinderische Verfahren, in Figur 5 durch gestrichelte Linien dargestellt, fügt sich in diesem Lebenszyklus vor der periodischen Wartung durch den Hersteller ein und überprüft während des Zeitintervalls zwischen zwei Wartungen die Funktionsfähigkeit der Kraftmessvorrichtung 1. Dadurch kann bereits vor einer eigentlichen Wartung erkannt werden ob die Funktionsfähigkeit gegeben oder eingeschränkt ist. Dies verhindert die Benutzung der Kraftmessvorrichtung 1 falls ein Schaden an der Kraftmessvorrichtung 1 vorliegen würde und die Kraftmessvorrichtung 1 unbeschadet zu sein scheint bzw. ohne Fehler zu funktionieren scheint. Andererseits kann das Zeitintervall zwischen zwei Wartungen auch verlängert werden, wenn die Überprüfung der Funktionsfähigkeit jeweils positiv ausfällt, wodurch der Benutzer Kosten, die durch den Ausfall der Kraftmessvorrichtung 1 entstehen, einspart.

Das erfinderische Verfahren vergleicht jeweils das mindestens eine Systemreferenzmittel 30 mit mindestens einem Systemkennmittel 29 und bestimmt aufgrund des Vergleichs die Funktionsfähigkeit der Kraftmessvorrichtung 1. Das Systemkennmittel 29 sowie das Systemreferenzmittel 30 stellen jeweils einen Bezug zwischen der Grösse des elektrischen Stromes 24 und der Grösse der Auslenkung der Spule 25, 125 aus ihrer Einspiellage her, und können dabei in Form von Werten in einer Systemtabelle oder einer Systemfunktion mit mindestens einem Parameter vorhanden sein. Das in der Verarbeitungseinheit 26 persistent abgespeicherte Systemreferenzmittel 30 repräsentiert dabei den Zustand der Kraftmessvorrichtung 1 mit einwandfreier Funktionsfähigkeit und das Systemkennmittel 29 den Zustand der Kraftmessvorrichtung 1 mit der aktuellen, momentanen Funktionsfähigkeit.

Vorgängig zum Vergleich des Systemkennmittels 29 mit dem Systemreferenzmittel 30 muss das Systemkennmittel 29 in Form von Werten in einer Systemtabelle oder einer Systemfunktion mit mindestens einem Parameter erstellt werden. Die Ermittlung der Werte der Systemtabelle oder der Systemfunktion mit mindestens einem Parameter als Schritt vor dem Vergleich des Systemkennmittels 29 mit dem Systemreferenzmittel 30, wie auch die Ermittlung der Werte einer Systemtabelle oder der Systemfunktion mit mindestens einem Parameter des Systemreferenzmittels 30 bei der Justierung, können auf verschiedene Arten erfolgen.

Im Folgenden werden Möglichkeiten zur Ermittlung der Werte einer Systemtabelle sowie der Systemfunktion mit mindestens einem Parameter aufgezeigt. Die Ermittlung wird vorteilhafterweise während der Produktion der Kraftmessvorrichtung 1, insbesondere während der Justierungsphase durchgeführt. Als eine erste Möglichkeit erfolgt die Ermittlung durch Variieren der Auslenkung der Spule 25, 125 und im Wesentlichen zeitgleichem Messen der zur Auslenkung der Spule 25, 125 zugehörigen Grösse des elektrischen Stromes 24. Alternativ kann als zweite Möglichkeit die Ermittlung durch Variieren der Grösse des elektrischen Stromes 24 und im Wesentlichen zeitgleichem Messen der zur Grösse des elektrischen Stromes 24 zugehörigen Auslenkung der Spule 25, 125 erfolgen. Um die Auslenkung der Spule 25, 125 oder die Grösse des elektrischen Stromes 24 variieren zu können, kann die Verarbeitungseinheit mittels zweier Schnittstellen zur Positionskontrolleinheit 23 eine Sollposition oder einen Sollstrom vorgeben.

Die beiden oben geschilderten Abläufe zur Ermittlung der Werte einer Systemtabelle und/oder der einer Systemfunktion mit mindestens einem Parameter können ergänzend auch mit einem zusätzlich aufgelegten Kalibriergewicht ausgeführt werden. Aus der Messung mit Kalibriergewicht und einer Messung ohne Kalibriergewicht können dann jeweils ein separates Systemreferenzmittel 30 bzw. Systemkennmittel 29 für das Magnetsystem 20, 120, für die Parallellenker 14, 114 und deren Biegelager 16 bzw. deren Federgelenke, des Positionssensors 21 und/oder des Hebelübertragungsverhältnisses gebildet werden.

Aus dem erstellten Systemkennmittel 29 und den vorangehend erstellten Systemkennmitteln 29' kann ein Verlauf der Funktionsfähigkeit erstellt werden, mittels welchem eine Vorhersage über die verbleibende Zeit bis zur nächsten Wartung der Kraftmessvorrichtung getroffen werden kann.

Sofern die Kraftmessvorrichtung 1 ein internes mit dem beweglichen Parallelschenkel 12, 112 verbindbares Kalibriergewicht aufweist, welches bei Bedarf einer Kalibrierung zugeschaltet werden kann, kann die Kraftmessvorrichtung 1 einsatzspezifisch eine oder mehrere der oben erwähnten Möglichkeiten zur Ermittlung der Werte einer Systemtabelle und/oder der Systemfunktion mit mindestens einem Parameter menügesteuert oder autonom durchführen.

Nach Überprüfung der Funktionsfähigkeit kann von der Verarbeitungseinheit 26 eine Freigabe der Kraftmessvorrichtung 1, eine Sperrung der Kraftmessvorrichtung 1, oder eine Warnung an den Benutzer erfolgen, oder generell eine Aktion der Kraftmessvorrichtung 1 erfolgen. Eine solche Warnung kann die Information beinhalten, dass eine Wartung kurz bevorsteht oder die Funktionsfähigkeit eingeschränkt ist.

In den Figuren 6 bis 10 werden anhand von Position-Strom-Diagrammen verschiedene Systemfunktionen von Kraftmessvorrichtungen 1 gezeigt. Die Systemfunktion stellt einen Bezug zwischen der Grösse des elektrischen Stromes 24 und der Grösse der Auslenkung der Spule 25, 125 aus ihrer Einspiellage her, und ist eine Möglichkeit um ein Systemkennmittel 29 bzw. ein Systemreferenzmittel 30 darzustellen. Die Markierungen 100% und -100% bzw. 10% und -10% auf der horizontalen Achse definieren die Auslenkungsposition der Spule 25, 125 im Magnetsystem 20, 120.

In Figur 6 ist eine Systemfunktion A einer idealisierten Kraftmessvorrichtung 1 mit idealem Verhalten der Biegelager 16 bzw. der Federgelenke und des Magnetsystems 20, 120 als Gerade eingezeichnet, was bedeutet, dass eine Auslenkung der Spule 25, 125 aus ihrer Einspiellage eine lineare Änderung der elektrischen Stromstärke 24 ergibt. Im Gegensatz zur Systemfunktion A entsprechen die Systemfunktionen S_{E1}, S_{E2} und S_{E3} dem realen Verhalten des Magnetsystems 20, 120 und stellen zugleich ein Systemreferenzmittel 30 dar.

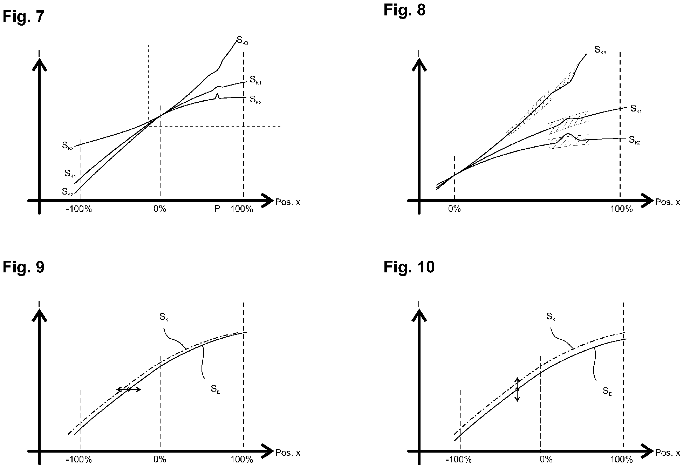

Erfährt die Kraftmessvorrichtung 1 eine übermässig hohe Belastung, sei es einen Schlag auf die Waagschale 15, einen Aufprall auf den Untergrund, so verändern sich auch die Systemfunktionen. In Figur 7 ist ein durch die Verarbeitungseinheit 26 erstelltes Systemkennmittel 29 mit den Systemfunktionen, S_{K1}, S_{K2} und S_{K3}, einer Kraftmessvorrichtung 1, bei welcher mindestens ein Biegelager 16 bzw. Federgelenk oder Membrane durch eine übermässig hohe Belastung Schaden genommen hat, dargestellt. Gut zu erkennen sind die nicht gleichmässig verlaufenden Systemfunktionen beziehungsweise die Ausprägungen der Systemfunktionen an der Auslenkungsposition P. Solche Ausprägung eines beschädigten Biegelagers 16 bzw. Federgelenks oder einer beschädigten Membrane kann verschiedenste Formen annehmen. Zum Beispiel wie an der Systemfunktion S_{K2} gezeigt, über einen kleinen Bereich der Auslenkungsposition verbunden mit einer starken Abweichung des elektrischen Spulenstromes 24, oder wie an der Systemfunktion S_{K3} gezeigt, über einen grossen Bereich der Auslenkungsposition verbunden mit einer schwachen Abweichung des elektrischen Spulenstromes 24.

Figur 8 ist ein vergrösserter Ausschnitt des gestrichelten Rechtecks in Figur 7. Ein Vergleich zwischen einem Systemreferenzmittel 30 und einem Systemkennmittel 29, wie Figur 8 aufzeigt, besteht darin das Ausmass der Abweichung zu quantifizieren und anhand eines Schwellwertes zu qualifizieren. Als Schwellwert kann zum Beispiel ein Toleranzband gesetzt sein, dessen eingeschlossener Bereich nicht überschritten werden darf, oder es kann, wie an der Systemfunktion S_{K3} gezeigt, für die eingeschlossene Fläche zwischen dem Systemreferenzmittel 30 und dem Systemkennmittel 29 ein Schwellwert gesetzt sein, oder beide Möglichkeiten kombiniert. Das Toleranzband muss nicht über den gesamten Auslenkungsbereich gleich breit sein, sondern kann auch in Abhängigkeit zur Auslenkung gesetzt werden. Damit wird erreicht, dass eine Abweichung der Systemfunktion eines Systemkennmittels 29 im Bereich der Einspiellage für die Qualifizierung eine geringere Toleranz aufweisen muss. Somit kann gewährleistet werden, dass verschiedenste Ausprägungen der Systemfunktionen quantifiziert und nach ihrer Bedeutsamkeit qualifiziert werden.

Anhand der Figur 9 wird gezeigt wie sich ein Verschieben des Positionssensors 21 in einer Systemfunktion S_{K} eines Systemkennmittels 29 resultiert. Ist der Positionssensor 21 nicht mehr an der Position an welcher die Justierung erfolgte weicht die Systemfunktion S_{K} des Systemkennmittels 29 im Position-Strom-Diagramm in horizontaler Richtung von der Systemfunktion S_{E} des Systemreferenzmittels 30 ab. Eine Abweichung ist somit einfach und schnell detektierbar.

In Figur 10 wird die Auswirkung einer sich ausbildenden, aussermittigen Verschiebung der Spule 25, 125 im Magnetsystem 27, 127 auf das Systemkennmittel 29 gezeigt. Analog zur Abweichung in Figur 9 entsteht eine Systemfunktion S_{K} des Systemkennmittels 29, welche in Richtung vertikal zur Systemfunktion S_{E} des Systemreferenzmittels 30 verschoben ist, was bedeutet, dass an allen Auslenkungspositionen der Spule 25, 125 ein stärkerer Strom 24 durch die Spule 25, 125 fliesst, als im justierten Zustand. In beiden Fällen, der aussermittigen Verschiebung der Spule 25, 125 im Magnetsystem 27, 127 und der Verschiebung des Positionssensors 21, sind geeignete Toleranzen bzw. Schwellwerte festzulegen, vorzugsweise mit engeren Toleranzen im Bereich der Einspiellage.

Es hat sich gezeigt, dass ein Systemreferenzmittel 30 und ein Systemkennmittel 29 von der Masse der aufgelegten Last abhängig sind, d.h. die Werte der Systemtabelle und/oder die Parameter der Systemfunktion eines Systemreferenzmittels 30 bzw. eines Systemkennmittels 29 gelten für eine bestimmte aufgelegte Last. In den Figuren 6, 7 und 8 ist dies mit unterschiedlichen Systemfunktionen S_{E1}, S_{E2} und S_{E3} bzw. S_{K1}, S_{K2} und S_{K3} dargestellt. Je stärker die zugehörige auf den beweglichen Parallelschenkel 12, 112 aufgebrachte Kraft ist, umso grösser ist die Krümmung einer Systemfunktion im Position-Strom-Diagramm. Die Systemfunktion S_{E3} bzw. S_{K3}weist eine nach oben gebogene Kennlinie auf. Diese entsteht bei Änderung der Kraftrichtung des Messaufnehmers 20, 120 wie dies zum Beispiel bei Push-Pull-Systemen auftritt. Das Systemreferenzmittel 30 und das Systemkennmittel 29 beinhalten deshalb mindestens eine Systemtabelle und/oder eine Systemfunktion mit den entsprechenden Parametern welche dann zur Überprüfung der Funktionsfähigkeit herangezogen wird, wenn die Systemtabelle bzw. die Systemfunktion der entsprechend mit der aufgebrachten Kraft am besten übereinstimmen, oder es wird zwischen zwei Werten der Systemtabelle bzw. zwischen zwei Systemfunktionen interpoliert.

Obwohl die Erfindung durch die Darstellung mehreren spezifischen Ausführungsbeispielen beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Kraftmessvorrichtung
- 10: Kraftmesszelle eines Hebelsystems
- 100: Kraftmesszelle eines Direktmesssystems
- 11, 111: feststehender Parallelschenkel
- 12, 112: beweglicher Parallelschenkel
- 13: Koppel
- 14, 114: Parallelführung
- 15: Waagschale
- 16: Biegelager
- 17: Wägebalken
- 117: Kraftübertragungsgestänge
- 18: Erster Hebelarm des Wägebalken
- 19: Zweiter Hebelarm des Wägebalken
- 20, 120: Messaufnehmer
- 21: Positionssensor
- 22: Positionssignal
- 23: Positionskontrolleinheit
- 24: Spulenstrom
- 25, 125: Spule
- 26: Verarbeitungseinheit
- 27, 127: Magnetsystem
- 28: Zusätzlicher Positionssensor
- 29: Systemkennmittel
- 29': vorangegangenes Systemkennmittel
- 30: Systemreferenzmittel

- A: Ideale Systemfunktion
- S_{E}, S_{E1}, S_{E2}, S_{E2}: Systemfunktion des Systemreferenzmittels
- S_{K}, S_{K1}, S_{K2}, S_{K3}: Systemfunktion des Systemkennmittels
- F: Gewichtskraft der aufgelegten Last
- x: Position des Wägebalkens bzw. des Kraftübertragungsgestänges
- z: Störgrösse
- Tᵢ: Temperatursignal
- t: Zeitsignal

## Patentansprüche

1. Verfahren zur Überprüfung der Funktionsfähigkeit, einer nach dem elektromagnetischen Kraftkompensationsprinzip arbeitenden Kraftmessvorrichtung (1), umfassend
- einen feststehenden Parallelschenkel (11, 111)
- einen die Last eines aufgelegten Wägeguts aufnehmenden beweglichen Parallelschenkel (12, 112), welcher durch Parallelführungen (14, 114) mit dem feststehenden Parallelschenkel verbunden ist,
- einen mit dem beweglichen Parallelschenkel (12, 112) in kraftübertragender Weise verbundenen Messaufnehmer (20, 120) umfassend eine in einem Magnetsystem (27, 127) bewegliche Spule (25, 125), welche von einem elektrischen Strom (24) durchflossen werden kann,
- einen die durch das Auflegen einer Last auf den beweglichen Parallelschenkel (12, 112) verursachte Auslenkung der Spule (25, 125) aus ihrer Einspiellage in Bezug auf das Magnetsystem (27, 127) ermittelnden Positionssensor (21, 28),
wobei der elektrische Strom (24) durch die Spule (25, 125) dazu dient die Spule (25, 125) und den mit der Spule (25, 125) oder dem Magnetsystem (27, 127) verbundene bewegliche Parallelschenkel (12, 112), durch die elektromagnetische Kraft zwischen der Spule (25, 125) und dem Magnetsystem (27, 127), in die Einspiellage zurückzuführen und/oder dort zu halten, **dadurch gekennzeichnet, dass**
mindestens ein Systemkennmittel (29) der Kraftmessvorrichtung (1) mittels einer Verarbeitungseinheit (26) erstellt wird, und
das Systemkennmittel (29) mit mindestens einem in der Verarbeitungseinheit (26) persistent abgespeicherten unveränderlichen Systemreferenzmittel (30) verglichen wird,
wobei das mindestens eine Systemkennmittel (29) und das mindestens eine Systemreferenzmittel (30) jeweils einen Bezug zwischen der Grösse des elektrischen Stromes (24) und der Grösse der Auslenkung der Spule (25, 125) aus ihrer Einspiellage herstellen,
und dass aufgrund des Vergleichs zwischen dem Systemkennmittel (29) und dem Systemreferenzmittel (30) die Funktionsfähigkeit der Kraftmessvorrichtung (1) bestimmt wird,
wobei zur Überprüfung der Funktionsfähigkeit die Grösse des elektrischen Stromes (24) und die Grösse der Auslenkung der Spule (25, 125) aus ihrer Einspiellage verwendet werden.

2. Verfahren zur Überprüfung der Funktionsfähigkeit nach Anspruch 1 **dadurch gekennzeichnet, dass**
das mindestens eine Systemreferenzmittel (30) die Funktionsfähigkeit der Kraftmessvorrichtung (1) zum Zeitpunkt der erstmaligen Justierung, insbesondere einer Justierung während der Herstellung oder zeitnah der Fertigstellung der Kraftmessvorrichtung (1), und/oder den Zustand einer einwandfreien Funktionsfähigkeit der Kraftmessvorrichtung (1) darstellt.

3. Verfahren zur Überprüfung der Funktionsfähigkeit nach einem der Ansprüche 1 oder 2 **dadurch gekennzeichnet, dass**
das mindestens eine Systemkennmittel (29) und/oder das mindestens eine Systemreferenzmittel (30) jeweils eine Systemtabelle mit zur Grösse der Auslenkung der Spule (25, 125) und zur Grösse des elektrischen Stromes (24) zugehörigen Werten der Gewichtskraft der aufgelegten Last umfassen/umfasst und/oder eine Systemfunktion mit mindestens einem Parameter und mit mindestens der Grösse der Auslenkung der Spule (25, 125) und der Grösse des elektrischen Stromes (24) als Eingangsgrössen umfassen/umfasst.

4. Verfahren zur Überprüfung der Funktionsfähigkeit nach Anspruch 3 **dadurch gekennzeichnet, dass**
der mindestens eine Parameter der Systemfunktion als eine Parametertabelle abgespeichert ist, wobei der mindestens eine Parameter der Systemfunktion lastabhängig sein kann.

5. Verfahren zur Überprüfung der Funktionsfähigkeit nach Anspruch 3 oder 4, **dadurch gekennzeichnet, dass**
die Ermittlung der Werte der Systemtabelle und/oder die Ermittlung des mindestens einen Parameters der Systemfunktion durch Variieren der Auslenkung der Spule (25, 125) und im Wesentlichen zeitgleichem Messen der zur Auslenkung der Spule (25, 125) zugehörigen Grösse des elektrischen Stromes (24) erfolgt, und/oder durch Variieren der Grösse des elektrischen Stromes (24) und im Wesentlichen zeitgleichem Messen der zur Grösse des elektrischen Stromes (24) zugehörigen Auslenkung der Spule (25, 125) erfolgt.

6. Verfahren zur Überprüfung der Funktionsfähigkeit nach Anspruch 5, **dadurch gekennzeichnet, dass**
die Ermittlung der Werte der Systemtabelle und/oder die Ermittlung des mindestens einen Parameters der Systemfunktion jeweils ohne und mit einem den beweglichen Parallelschenkel (12, 112) beaufschlagenden Gewicht durchgeführt wird, wobei es sich bei dem Gewicht um ein extern auflegbares oder ein intern mittels einer Vorrichtung auflegbares Gewicht handeln kann.

7. Verfahren zur Überprüfung der Funktionsfähigkeit nach einem der Ansprüche 1 bis 6, **dadurch gekennzeichnet, dass**
das mindestens eine Systemreferenzmittel (30) für jede Kraftmessvorrichtung (1) individuell oder für denselben Typ einer Kraftmessvorrichtung (1) generisch erstellt wird.

8. Verfahren zur Überprüfung der Funktionsfähigkeit nach einem der Ansprüche 1 bis 7 **dadurch gekennzeichnet, dass**
mittels des Vergleichs ein Bruch oder Anriss und/oder Verbiegen eines Gelenks der Parallelführung (14, 114) und/oder eine Positionsveränderung der Spule (25, 125) im Magnetsystem (27, 127) gegenüber einer ursprünglichen Position und/oder eine Positionsveränderung des Positionssensors (21, 28) gegenüber einer ursprünglichen Position überprüft wird, wobei die ursprünglichen Positionen jeweils für den Zustand der Kraftmessvorrichtung (1) gelten, in welcher das Systemreferenzmittel (30) erstellt wurde.

9. Verfahren zur Überprüfung der Funktionsfähigkeit nach einem der Ansprüche 1 bis 8 **dadurch gekennzeichnet, dass**
aus dem erstellten Systemkennmittel (29) und den vorangehend erstellten Systemkennmitteln (29') ein Verlauf der Funktionsfähigkeit erstellt wird, mittels welchem eine Vorhersage über die Funktionsfähigkeit, insbesondere über die verbleibende Zeit bis zur nächsten Wartung der Kraftmessvorrichtung (1), getroffen werden kann.

10. Gravimetrische Kraftmessvorrichtung (1) nach dem elektromagnetischen Kraftkompensationsprinzip arbeitend, mit einem Verfahren zur Überprüfung der Funktionsfähigkeit der gravimetrischen Kraftmessvorrichtung (1) nach einem der Ansprüche 1 bis 9.

11. Computergestütztes Programm zur Ausführung eines Verfahrens zur Überprüfung der Funktionsfähigkeit nach einem der Ansprüche 1 bis 10 mit Ausgabe eines Signals zur Auslösung einer Aktion durch die Kraftmessvorrichtung (1) und mindestens die Grösse des elektrischen Stromes (24) und die Grösse der Auslenkung der Spule (25) aus ihrer Einspiellage als Eingangsgrössen verwendend, für eine nach dem elektromagnetischen Kraftkompensationsprinzip arbeitende gravimetrische Kraftmessvorrichtung (1).

12. Computergestütztes Programm zur Ausführung des Verfahrens zur Überprüfung der Funktionsfähigkeit nach Anspruch 11, **dadurch gekennzeichnet, dass**
das computergestützte Programm auf ein Systemreferenzmittel (30) und mindestens ein Systemkennmittel (29) nach einem der Ansprüche 1 bis 9 zugreift.

## Claims

1. Method of verifying the functionality of a force-measuring device 1 which works according to the principle of electromagnetic force compensation and comprises
- a stationary parallel leg (11, 111),
- a movable parallel leg (12, 112) which serves to receive the load of a weighing object and is connected to the stationary leg by two parallel guides (14, 114),
- a measurement transducer (20, 120) which is coupled to the parallel leg (12, 112) through a force-transmitting connection and comprises a coil (25, 125) that is arranged with guided mobility in a magnet system (27, 127) and can carry an electric current (24),
- a position sensor (21, 28) which serves to detect the deflection of the coil (25, 125) from its balanced position relative to the magnet system (27, 127) that occurs as a result of placing a load on the movable parallel leg (12, 112),
wherein the electric current (24) flowing through the coil (25, 125), by way of the electromagnetic force acting between the coil (25, 125) and the magnet system (127), serves to return the coil (25, 125) and the movable parallel leg (12, 112) connected to the coil (25, 125) or the magnet system (27, 127) to the balanced position and/or to maintain it in the balanced position, **characterized in that**
at least one system-characterizing means (29) of the force-measuring device (1) is established by means of a processor unit (26), and
the system-characterizing means (29) is compared to at least one unchangeable system reference means (30) that is stored in a persistent memory file of the processor unit (26), wherein the at least one system-characterizing means (29) and the at least one system reference means (30) each establish a relationship between the magnitude of the electric current (24) and the magnitude of the deflection of the coil (25, 125) from its balanced position
and that, based on the comparison, the functionality of the force-measuring device (1) is determined,
wherein the magnitude of the electric current (24) and the magnitude of the deflection of the coil (25, 125) from its balanced position are used for the verification of the functionality.

2. Method of verifying the functionality according to claim 1, **characterized in that** the at least one system reference means (30) represents the functionality of the force-measuring device (1) at the time of the initial adjustment, in particular the adjustment that took place during production or close to the completion of the force-measuring device (1) and/or reflects the condition of a fault-free functionality of the force-measuring device (1).

3. Method of verifying the functionality according to one of the claims 1 or 2, **characterized in that** the at least one system-characterizing means (29) and/or the at least one system reference means (30) each include a system table listing the respective values of the weight force of the applied load associated with different magnitudes of the deflection of the coil (25, 125) from its balanced position and with different magnitudes of the electric current (24), and/or a system function with at least one parameter and with at least the magnitude of the deflection of the coil (25, 125) and the magnitude of the electric current (24) as input quantities.

4. Method of verifying the functionality according to claim 3, **characterized in that** the at least one parameter of the system function is stored as a parameter table, wherein the at least one parameter of the system function can be load-dependent.

5. Method of verifying the functionality according to claim 3 or 4, **characterized in that** the values of the system table and/or the at least one parameter of the system function are determined by varying the deflection of the coil (25, 125) and measuring at essentially the same time the magnitude of the electric current (24) associated with the deflection of the coil, and/or by varying the magnitude of the electric current (24) and measuring at essentially the same time the deflection of the coil (25, 125) associated with the magnitude of the electric current (24).

6. Method of verifying the functionality according to claim 5, **characterized in that** the values of the system table and/or the at least one parameter of the system function are each determined without a weight as well as with a weight applied to the movable parallel leg (12, 112), wherein the weight can be an externally handled weight or one that is set in place internally by a handling mechanism.

7. Method of verifying the functionality according to one of the claims 1 to 6, **characterized in that** the at least one system reference means (30) is established individually for each force-measuring device or generically for a given type of force-measuring device (1).

8. Method of verifying the functionality according to one of the claims 1 to 7, **characterized in that** the comparison is used to investigate a fracture or tear and/or deformation of a pivot of the parallel-guiding mechanism (14, 114) and/or a position change of the coil (25, 125) of the magnet system (27, 127) relative to an original position and/or a position change of the position sensor (21, 28) relative to an original position, wherein the respective original positions are associated with the condition of the force-measuring device (1) in which the system reference means (30) was established.

9. Method of verifying the functionality according to one of the claims 1 to 8, **characterized in that** a trend line of the functionality is established based on the currently determined system-characterizing means (29) and the previously established system-characterizing means (29') and that, based on said trend line, a prediction can be made for the functionality, in particular for the time remaining until the next service of the force-measuring system.

10. Gravimetric force-measuring device (1), working according to the principle of electromagnetic force compensation and using a method for the verification of the functionality according to one of the claims 1 to 9.

11. Computer-assisted program for the execution of a method of verifying the functionality according to one of the claims 1 to 10 for a force-measuring device (1) that works according to the principle of electromagnetic force compensation, wherein the program includes issuing a signal to initiate an action of the force-measuring device (1) and using at least the magnitude of the electric current (24) and the magnitude of the deflection of the coil (25) from its balanced position as input quantities.

12. Computer-assisted program for the execution of the method of verifying the functionality according to claim 11, **characterized in that** the computer-assisted program recalls a system reference means (30) and at least one system-characterizing means (29) according to one of the claims 1 to 19.

## Revendications

1. Procédé pour la vérification de la capacité de fonctionnement d'un dispositif de mesure de force (1) fonctionnant selon le principe de compensation de force électromagnétique, comprenant:
- une branche parallèle fixe (11, 111)
- une branche parallèle mobile (12, 112) recevant la charge d'un produit à peser déposé, laquelle est reliée à la branche parallèle fixe par des guidages parallèles (14, 114),
- un capteur de mesure (20, 120) relié avec transmission de force à la branche parallèle mobile (12, 112), comprenant une bobine (25, 125) déplaçable dans un système d'aimant (27, 127), laquelle peut être traversée par un courant électrique (24),
- un capteur de position (21, 28) détectant une déviation de la bobine (25, 125) hors de sa position d'équilibre par rapport au système d'aimant (27, 127), occasionnée par le dépôt d'une charge sur la branche parallèle mobile (12, 112),
dans lequel le courant électrique (24) à travers la bobine (25, 125) sert à renvoyer et/ou à maintenir la bobine (25, 125) et la branche parallèle mobile (12, 112) reliée à la bobine (25, 125) ou au système d'aimant (27, 127) vers/dans la position d'équilibre, par la force électromagnétique entre la bobine (25, 125) et le système d'aimant (27, 127),
**caractérisé en ce que**
au moins un moyen d'identification de système (29) du dispositif de mesure de force (1) est établi à l'aide d'une unité de traitement (26), et
le moyen d'identification de système (29) est comparé avec au moins un moyen de référence de système (30) invariable enregistré de façon persistante dans l'unité de traitement (26),
dans lequel l'au moins un moyen d'identification de système (29) et l'au moins un moyen de référence de système (30) établissent respectivement un rapport entre l'intensité du courant électrique (24) et l'amplitude de la déviation de la bobine (25, 125) hors de sa position d'équilibre,
et **en ce que** la capacité de fonctionnement du dispositif de mesure de force (1) est déterminée sur la base de la comparaison entre le moyen d'identification de système (29) et le moyen de référence de système (30),
dans lequel l'intensité du courant électrique (24) et l'amplitude de la déviation de la bobine (25, 125) hors de sa position d'équilibre sont utilisées pour vérifier la capacité de fonctionnement.

2. Procédé pour la vérification de la capacité de fonctionnement selon la revendication 1, **caractérisé en ce que** l'au moins un moyen de référence de système (30) représente la capacité de fonctionnement du dispositif de mesure de force (1) au moment du réglage initial, en particulier d'un réglage effectué pendant la fabrication ou peu de temps après la fabrication du dispositif de mesure de force (1), et/ou l'état d'une capacité de fonctionnement irréprochable du dispositif de mesure de force (1).

3. Procédé pour la vérification de la capacité de fonctionnement selon l'une des revendications 1 ou 2, **caractérisé en ce que** l'au moins un moyen d'identification de système (29) et/ou l'au moins un moyen de référence de système (30) comprennent/comprend respectivement un tableau de système des valeurs de force pondérale de la charge déposée correspondant à l'amplitude de la déviation de la bobine (25, 125) et à l'intensité du courant électrique (24), et/ou comprend/comprennent une fonction de système avec au moins un paramètre et avec au moins l'amplitude de la déviation de la bobine (25, 125) et l'intensité du courant électrique (24) comme valeurs de départ.

4. Procédé pour la vérification de la capacité de fonctionnement selon la revendication 3, **caractérisé en ce que** l'au moins un paramètre de la fonction de système est enregistré sous la forme d'un tableau de paramètres, l'au moins un paramètre de la fonction de système pouvant dépendre de la charge.

5. Procédé pour la vérification de la capacité de fonctionnement selon la revendication 3 ou 4, **caractérisé en ce que** la détermination des valeurs du tableau de système et/ou la détermination de l'au moins un paramètre de la fonction de système sont/est effectuée(s) en faisant varier la déviation de la bobine (25, 125) et en mesurant quasiment simultanément l'intensité du courant électrique (24) correspondant à la déviation de la bobine (25, 125), et/ou en faisant varier l'intensité du courant électrique (24) et en mesurant quasiment simultanément la déviation de la bobine (25, 125) correspondant à l'intensité du courant électrique (24).

6. Procédé pour la vérification de la capacité de fonctionnement selon la revendication 5, **caractérisé en ce que** la détermination des valeurs du tableau de système et/ou la détermination de l'au moins un paramètre de la fonction de système sont/est effectuée(s) respectivement sans ou avec un poids sollicitant la branche parallèle mobile (12, 112), le poids pouvant être un poids susceptible d'être déposé de façon externe ou de façon interne à l'aide d'un dispositif.

7. Procédé pour la vérification de la capacité de fonctionnement selon l'une des revendications 1 à 6, caractérisé en ce quel'au moins un moyen de référence de système (30) est établi pour chaque dispositif de mesure de force (1) individuellement ou pour un même type de dispositif de mesure de force (1).

8. Procédé pour la vérification de la capacité de fonctionnement selon l'une des revendications 1 à 7, **caractérisé en ce que** la comparaison permet de vérifier une fracture ou une fissure et/ou une déformation d'une articulation du guidages parallèles (14, 114) et/ou un changement de position de la bobine (25, 125) dans le système d'aimant (27, 127) par rapport à une position initiale et/ou un changement de position du capteur de position (21, 28) par rapport à une position initiale, les positions initiales étant valables respectivement pour l'état du dispositif de mesure de force (1) dans lequel le moyen de référence de système (30) a été établi.

9. Procédé pour la vérification de la capacité de fonctionnement selon l'une des revendications 1 à 8, caractérisé en ce queune évolution de la capacité de fonctionnement est établie à partir du moyen d'identification de système (29) établi et des moyens d'identification de système (29) établis précédemment, celle-ci permettant d'établir des prévisions concernant la capacité de fonctionnement, en particulier concernant le temps restant jusqu'au prochain entretien du dispositif de mesure de force (1).

10. Dispositif de mesure de force gravimétrique (1) fonctionnant selon le principe de compensation de force électromagnétique, avec un procédé pour la vérification de la capacité de fonctionnement du dispositif de mesure de force gravimétrique (1) selon l'une des revendications 1 à 9.

11. Programme assisté par ordinateur pour l'exécution d'un procédé pour la vérification de la capacité de fonctionnement selon l'une des revendications 1 à 10, avec émission d'un signal pour le déclenchement d'une action par le dispositif de mesure de force (1), et employant au moins l'intensité du courant électrique (24) et l'amplitude de la déviation de la bobine (25) hors de sa position d'équilibre en tant que valeurs initiales, pour un dispositif de mesure de force gravimétrique (1) fonctionnant selon le principe de compensation de force électromagnétique.

12. Programme assisté par ordinateur pour l'exécution du procédé pour la vérification de la capacité de fonctionnement selon la revendication 11, caractérisé en ce quele programme assisté par ordinateur accède à un moyen de référence de système (30) et à au moins un moyen d'identification de système (29) selon l'une des revendications 1 à 9.
